# EUROPEAN PATENT SPECIFICATION

(11) **EP 2 792 518 B1**
(45) Date of publication and mention of the grant of the patent: **16.01.2019**
(21) Application number: 13164062.5
(22) Date of filing: 17.04.2013
(51) Int. Cl.: B60J 5/04

(54) **DOOR AND VEHICLE**
TÜR UND FAHRZEUG
PORTIÈRE ET VÉHICULE

(43) Date of publication of application: 22.10.2014
(73) Proprietor: Ford Global Technologies, LLC, Dearborn, MI 48126 (US)
(72) Inventor: Turker, Emre, Atasehir /istanbul (TR); Dogan, Baris, De irmendere -GOLCUK -KOCAELI (TR); Atik, Nusret, Nilüfer bursa (TR); Sakli, Osman, Nilüfer / Bursa (TR)
(74) Representative: Illing, Rolf

(56) References cited:
- EP-A1- 2 397 352
- WO-A2-2010/133850
- DE-A1-102008 038 845

## Description

The present invention relates to a door for a vehicle, according to the preamble of claim 1, as well as a vehicle including this door.

It is known in the prior art to arrange an exterior mirror on a shoulder of a vehicle door. In the known embodiment the mirror is positioned on an outer panel of the door.

For example, the EP 2 397 352 A1, which discloses the preamble of claim, shows a side door structure of a vehicle incorporated with a countermeasure against a frontal crash or a side crash event. For avoiding deformation of vehicle doors by transferring the impact in the event of a front collision from the front pillar to the centre pillar while properly receiving a bending moment by the collision, the structure includes a beam member attached to an inner panel.

The WO 2010/133850 A2 describes a window assembly comprising a window regulator for driving a main window up and down, a connection system with a latch, a division bar, and a quarter-light window which may be driven down by the regulator to a controlled index position at which the latch disengages such that the quarter-light may be left in a slightly lowered index position while the main window may be further lowered, the latch reengaging once the main window is raised again, the raising and lowering of the quarter-light window enabling the quarter-light to securely engage with a seal positioned between its top edge and an A-pillar of the vehicle and also allowing a door to which the assembly is mounted to be opened and closed without interference between the quarter-light and the seal.

The DE 10 2008 038 845 A1 shows a mirror reinforcement, wherein an element has a component region forming a mirror triangle, and another component region provided with a fastening region connectable with a side impact protection carrier of a door of a motor vehicle. Another fastening region is provided between the former and the latter component regions and connectable with a rail carrier of the door. The element is connectable with a hinge reinforcement region of a door support part, and the fastening regions are arranged at a height distance to each other.

The previous design may have stiffness issues. Hence, there may be a risk of rattling noises or of insufficient burglar proofing for example.

It is an objective of the present invention to provide a door for a vehicle and a vehicle with an improved means for accommodating an exterior mirror.

According to the present invention, this objective is achieved by a door as claimed in claim 1 and by a vehicle as claimed in claim 3. The depending claims contain further developments of the invention.

According to a first aspect of the present invention a door for a vehicle is provided. The door includes an outer panel and an inner panel, wherein the outer panel and the inner panel comprise a window cut-out. The door comprises a mirror bracket arranged below a lower edge of the window cut-out and adjacent to an inner surface of the outer panel for reinforcing the outer panel. The mirror bracket comprises at least one fastening point for mounting a mirror. By this measure, the mirror is not only held by the outer panel but also by the mirror bracket and the inner panel. This measure allows for securely fixing the mirror and provides additional stiffness of the mirror arrangement. Hence, rattling noises can be avoided. Especially for commercial vehicles a resistant mirror mounting is proposed.

Further, the inventive door comprises a division bar which divides the window cut-out in two areas. The mirror bracket is arranged below one of the two areas, which is provided for accommodating a quarter glass. By this measure, the viewing angle is increased.

Additional, the mirror bracket comprises a channel section for accommodating a seal. In particular the channel section may be L-shaped. By this measure, the quarter glass is prevented for undesired removing. Thus, burglary protection is increased. Moreover, a simple and cost effective design becomes possible. There is no need for an additional glass channel. Furthermore, the door is better protected against the ingress of water.

In a further development of the inventive door the door may include a belt bracket and the mirror bracket may be formed integrally with the belt bracket. By this measure, a higher stiffness and rigidity can be achieved. The number of parts may be further reduced.

According to a second aspect of the present invention a vehicle is provided. The inventive vehicle includes an inventive door. The vehicle may be a commercial vehicle. Thus, the benefits of the inventive door will benefit the vehicle.

Further features, properties and advantages of the present invention will become clear from the following description of embodiments in conjunction with the accompanying drawings.
- Figure 1: shows an inventive vehicle.
- Figure 2: shows a door of the vehicle.
- Figure 3: shows a detail A of the door.
- Figure 4: shows a detail B of the door.
- Figure 5: shows a sectional view of the door.

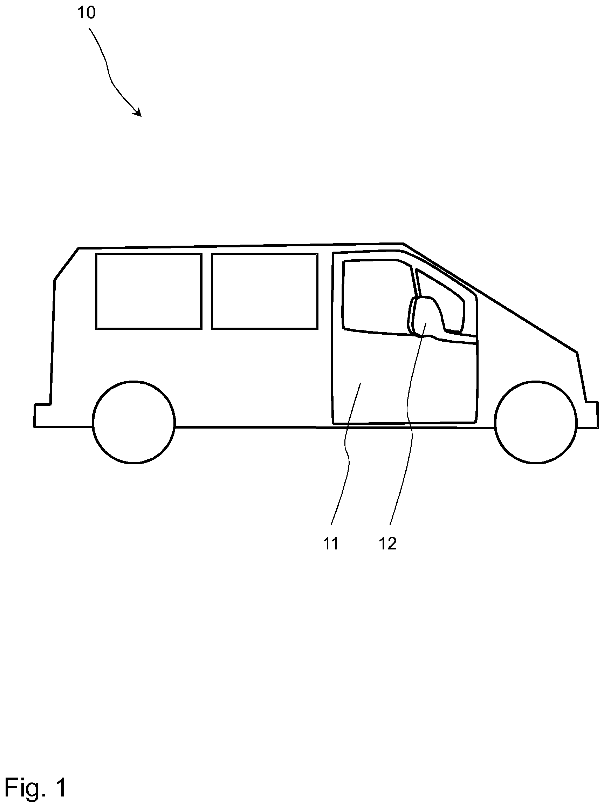

The present invention will now be described, by way of example, with reference to the accompanying drawings, in which Fig. 1 shows a vehicle 10 including a door 11 with a mirror 12. In a preferred embodiment the vehicle 10 is a commercial vehicle 10. The mirror 12 is an exterior mirror 12.

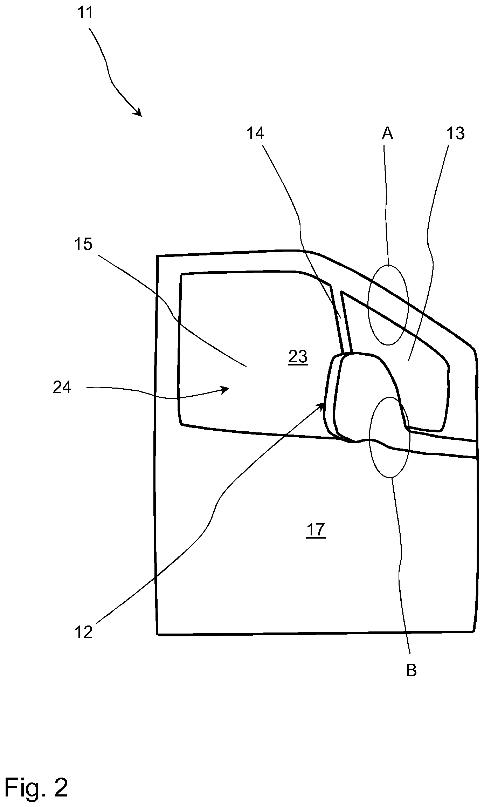

Fig. 2 shows an embodiment of the inventive door 11. The door 11 is a front door 11 of the vehicle 10. The door 11 according to the present invention includes a window cut-out 23 for a side window 24. In the present embodiment, the side window 24 is a bipartite side window 24. The bipartite side window 24 of the present embodiment includes a quarter glass 13 and a main window 15. The quarter glass 13 is not suitable for being rolled down. The quarter glass 13 is preferably non-movable and fixed in its position. The main window 15 is especially suitable for being rolled down. In the shown embodiment the quarter glass 13 and the main window 15 are separated by a division bar 14.

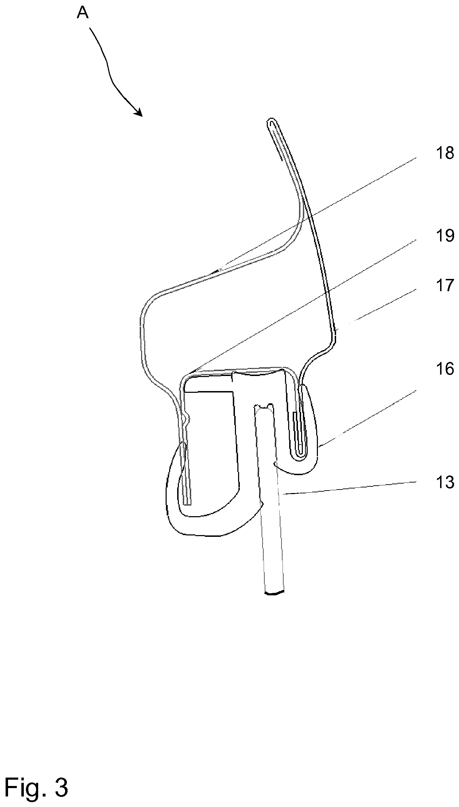

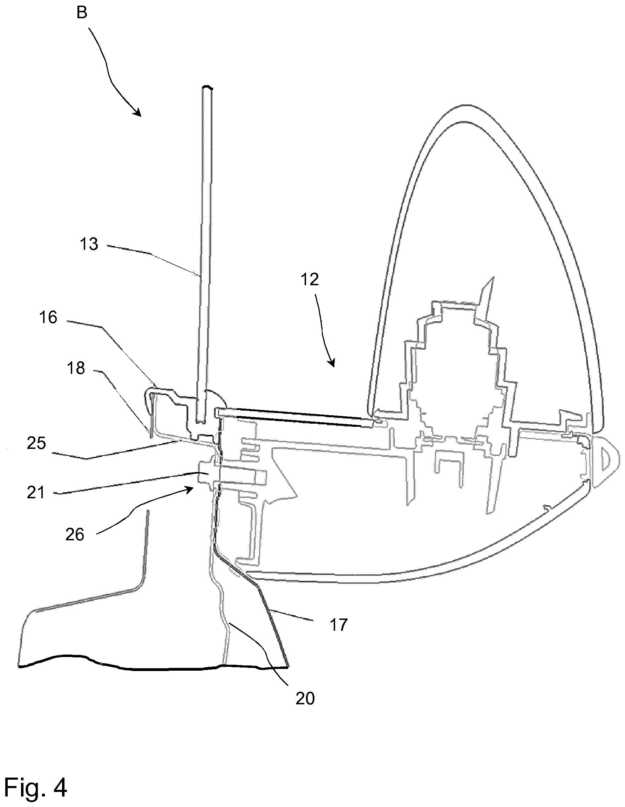

Fig. 2 shows the positions of a detail A and a detail B, which are shown in Fig. 3 and in Fig. 4, respectively. Detail A and the detail B relate to the arrangement at the periphery of the side window 24. Detail A relates to the area above the side window 24 and the detail B relates to the shoulder of the door 11 below the side window 24.

Fig. 3 is a cross-sectional view of detail A which shows an upper edge of the window cut-out 23. The profile of the door 11 is formed by an outer panel 17 and an inner panel 18 which together form the door 11. For accommodating the side window 24, the door 11 comprises a glass channel 19.

In the glass channel 19 a seal 16 is arranged. The seal 16 frames the side window 23 as usual. In the shown embodiment the seal 16 frames the quarter glass 13 of the side window 23.

Fig. 4 is a cross-sectional view of detail B. Detail B shows a shoulder of the door 11. The outer surface of the outer panel 17 which is located directly below the side window 23 is the shoulder of the door 11. In the shown embodiment in Fig. 4 the mirror 12 is mounted on the shoulder.

According to the present invention the door 11 is suitable for mounting the mirror 12 on the shoulder. Therefore, the inventive door 11 includes a mirror bracket 20. The mirror bracket 20 is positioned between the outer panel 17 and the inner panel 18. In the area of the shoulder the mirror bracket 20 is substantially arranged directly adjacent to an inner surface of the outer panel 17.

The mirror bracket 20 reinforces at least the outer panel 17 in the area of the shoulder of the door 11 and includes a fastening point 26 for mounting the mirror 12. In the shown embodiment the mirror bracket 20 and the mirror 12 are connected by one or more bolts 21 for example. However, other fixing means like screws, rivets, etc. are also conceivable.

The mirror bracket 20 includes a channel section 25 that is arranged below a lower edge of the window cut-out 23. Thus, the window bracket 20 forms at least partly a channel for accommodating the seal 16 for the side window 24 similar to the glass channel 19 on the upper window edge. Hence, a separate glass channel 19 is not required at the lower edge of the window cut-out 23. In the channel section 25 the seal 16 of the quarter glass 13 can be accommodated. In the inventive embodiment the channel section 25 of the mirror bracket 20 comprises an L-shape. The channel section 25 prevents the seal 16 and the quarter glass 13 from dropping down. Moreover, it prevents water from penetrating the inside of the door 11.

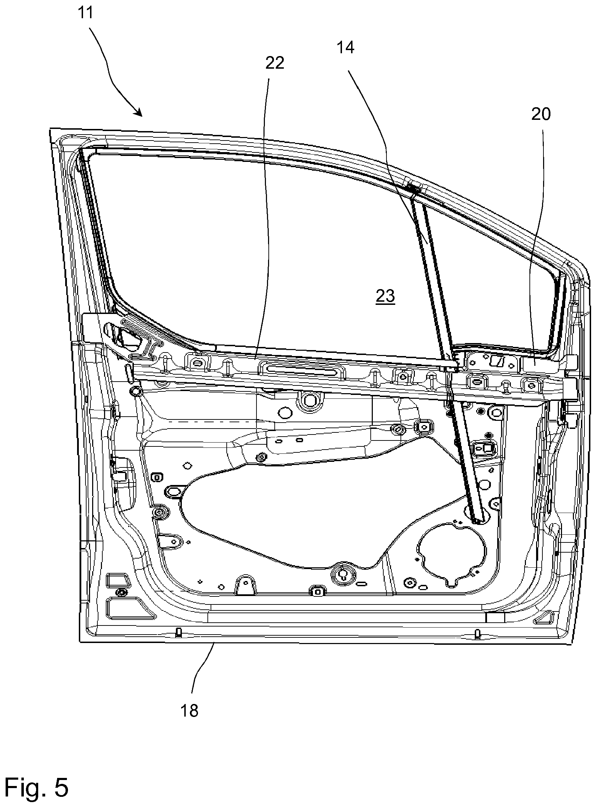

Fig. 5 shows the door 11 of the present embodiment in a longitudinal section without the outer panel 17. Hence, the longitudinal extension of the mirror bracket 20 is visible. In the shown embodiment the mirror bracket reaches from the division bar 14 to a forward edge of the window cut-out 23.

The inventive door 11 includes a belt bracket 22. In the shown embodiment the belt bracket 22 reaches from a rear edge of the window cut-out 23 to the division bar. In a preferred embodiment of the inventive door 11 the mirror bracket 20 and the belt bracket 22 are formed integrally so that the mirror bracket 20 and the belt bracket 22 are sections of a multifunctional bracket.

In a preferred embodiment of the inventive door 11 the mirror bracket 20 is at least fixed to the inner panel 18 by a plurality of weld spots. Thus, the mirror bracket 20 gives the door 11 additional stiffness. Moreover, forces which act on the mirror 12 are absorbed by different points of the structure of the door 11.

### List of reference numerals

- 10: Vehicle
- 11: Door
- 12: Mirror
- 13: Quarter Glass
- 14: Division Bar
- 15: Main Window
- 16: Seal
- 17: Outer Panel
- 18: Inner Panel
- 19: Glass Channel
- 20: Mirror Bracket
- 21: Bolt
- 22: Belt Bracket
- 23: Window Cut-out
- 24: Side Window
- 25: Cannel Section
- 26: Fastening Point
- A: Detail A
- B: Detail B

## Claims

1. A door (11) for a vehicle (10) including an outer panel (17) and an inner panel (18), wherein the outer panel (17) and the inner panel (18) comprise a window cut-out (23), wherein the door (11) comprises a mirror bracket (20) arranged below a lower edge of the window cut-out (23), and adjacent to an inner surface of the outer panel (17), **characterised in that** the door (11) comprises a division bar (14) which divides the window cut-out in two areas, **in that** the mirror bracket (20) is arranged below one of the two areas which is provided for accommodating a quarter glass (13), and **in that** the mirror bracket (20) is arranged for reinforcing the outer panel (17), wherein the mirror bracket (20) comprises at least one fastening point (26) for mounting a mirror (12) and the mirror bracket (20) comprises an L-shaped channel section (25) for accommodating a seal (16).

2. The door (11) as claimed in claim 1, wherein the door (11) includes a belt bracket (22) and the mirror bracket (20) is formed integrally with the belt bracket (22).

3. A vehicle (10) including a door (11) as claimed in any one of the preceding claims.

4. The vehicle (10) as claimed in claim 3, wherein the vehicle (10) is a commercial vehicle (10).

## Patentansprüche

1. Tür (11) für ein Fahrzeug (10), die eine Außenbeplankung (17) und eine Innenbeplankung (18) aufweist, wobei die Außenbeplankung (17) und die Innenbeplankung (18) einen Fensterausschnitt (23) umfassen, wobei die Tür (11) einen Spiegelhalter (20) umfasst, der unter einem unteren Rand des Fensterausschnitts (23) und neben einer Innenfläche der Außenbeplankung (17) angeordnet ist, **dadurch gekennzeichnet, dass** die Tür (11) einen Unterteilungssteg (14) umfasst, der den Fensterausschnitt in zwei Bereiche unterteilt, dass der Spiegelhalter (20) unter einem der beiden Bereiche angeordnet ist, der zur Aufnahme einer Seitenscheibe (13) vorgesehen ist, und dass der Spiegelhalter (20) zur Verstärkung der Außenbeplankung (17) angeordnet ist, wobei der Spiegelhalter (20) mindestens eine Befestigungsstelle (26) zur Befestigung eines Spiegels (12) umfasst und der Spiegelhalter (20) ein L-förmiges Kanalprofil (25) zur Aufnahme einer Dichtung (16) umfasst.

2. Tür (11) nach Anspruch 1, wobei die Tür (11) einen Gurthalter (22) aufweist und der Spiegelhalter (20) integral mit dem Gurthalter (22) ausgebildet ist.

3. Fahrzeug (10), das eine Tür (11) nach einem der vorhergehenden Ansprüche aufweist.

4. Fahrzeug (10) nach Anspruch 3, wobei das Fahrzeug (10) ein Nutzfahrzeug (10) ist.

## Revendications

1. Porte (11) pour un véhicule (10) comportant un panneau extérieur (17) et un panneau intérieur (18), le panneau extérieur (17) et le panneau intérieur (18) comprenant une découpe de fenêtre (23),
la porte (11) comprenant un support de fixation de rétroviseur (20) disposé en dessous d'un bord inférieur de la découpe de fenêtre (23), et adjacent à une surface intérieure du panneau extérieur (17), **caractérisée en ce que** la porte (11) comprend une barre de séparation (14) qui sépare la découpe de fenêtre en deux zones, **en ce que** le support de fixation de rétroviseur (20) est disposé en dessous d'une des deux zones qui est prévue pour recevoir une custode (13), et **en ce que** le support de fixation de rétroviseur (20) est prévu pour renforcer le panneau extérieur (17), le support de fixation de rétroviseur (20) comprenant au moins un point d'attache (26) pour monter un rétroviseur (12) et le support de fixation de rétroviseur (20) comprenant une section de canal en forme de L (25) pour recevoir un joint (16).

2. Porte (11) selon la revendication 1, dans laquelle la porte (11) comporte un support de fixation de ceinture (22) et le support de fixation de rétroviseur (20) est formé intégralement avec le support de fixation de ceinture (22).

3. Véhicule (10) comportant une porte (11) selon l'une quelconque des revendications précédentes.

4. Véhicule (10) selon la revendication 3, dans lequel le véhicule (10) est un véhicule commercial (10) .
